# EUROPEAN PATENT APPLICATION

(11) **EP 2 803 472 A2**
(43) Date of publication of application: **19.11.2014**
(21) Application number: 14168053.8
(22) Date of filing: 13.05.2014
(51) Int. Cl.: B29C 53/06, B29C 63/04, B32B 37/12

(54) **Laminar structures and methods of producing the same**

(30) Priority: 15.05.2013 GB 201308783
(71) Applicant: Focus DGi Ltd, Welham Green, Hertforshire AL9 7JL (GB); Jude Jones Ltd, Welham Green, Hertfordshire AL9 7JL (GB)
(72) Inventor: Davis, David, Welham Green, Hertfordshire AL9 7JL (GB)
(74) Representative: Bawden, Peter Charles

(57) **Abstract**

Articles for use in a possibly hygienic sterile environment comprising one or more central components clad with a hygienic material are produced by bonding the one or more components to a thermoformable material cutting a groove within the central components, line heating the cladding material along the surface corresponding to the line of the groove and bending the cladding material about the line to bring the surfaces defining the groove together and providing an adhesive within the groove to bond the surfaces together, the grooves may be formed along the central component and the process may be performed on central components which can be bonded together to form the finished article.

## Description

The present invention relates to improvements in or relating to laminar structures and to a process for their manufacture. In particular the invention relates to laminar articles comprising a thermoformable cladding material facia on a central component. Such articles find use in a variety of outlets particularly in outlets where hygienic and perhaps sterile environments are required such as in hospitals and clinics and food preparation areas as well as research laboratories and environments containing dangerous materials.

Currently doors, door frames and other panelling to be used in such environments consist of a thermoformed plastic cladding on a substrate sheet such as a slab of chipboard which, depending upon the use is provided as two cladding sheets on both faces of the slab of chipboard and the cladding sheets are thermoformed to conform to the shape of the exterior of the slab. The cladding sheets are typically rigid or semi-rigid sheets of thermoplastic material such as polyvinyl chloride (PVC) which are difficult to thermoform around the edges of the central slab and it is also difficult to form a precise join between the folded edges of the thermoformed sheets.

The current process for the manufacture of such articles is a manual labour intensive and time consuming process. It requires the manual provision of the cladding material of the article within a vacuum former, the provision of the central slab of the article inside the cladding material. The provision of an adhesive on the surfaces and edges of the central slab, the sealing of the vacuum former and the provision of heat and pressure to thermoform the cladding material around the central slab and it is also necessary to cure the adhesive to ensure an adequate bond between the slab and the cladding material. The finished article must then be removed from the vacuum former.

Another difficulty associated with the current method of providing a cladding around a single slab of material is that it is difficult to provide accessories such as vision panels, hinges, handles and locks once the cladding has been placed as it is necessary to penetrate both the cladding material and the slab material to insert the accessories. This can be time consuming, requires skilled manipulation and can result in unsightly and less hygienic areas in the finished article.

The present invention addresses these problems and provides an improved laminar structure and an improved method for the manufacture of such a laminar structure. Accordingly the present invention provides a hygienic laminar construction comprising two sheets of material bonded to each other each sheet having one or more grooves formed along the length of the sheet to provide longitudinal elements of the material separate from each other and wherein the exterior surfaces of the longitudinal elements are bonded to a thermoformable cladding material and the cladding material has been bent about the line of the base of the grooves to bring the opposed surfaces of the grooves into contact where they are adhesively bonded.

The invention further provides a process for the production of a hygienic laminar structure comprising forming one or more grooves along a sheet of material that is bonded to a thermoformable cladding sheet to create separate elements of the sheet material, bonded to the cladding sheet providing heat to the exposed outer surface of the cladding sheet along the line or lines provided by the groove or grooves and bending the thermoformable cladding material about the line or lines to bring separate elements of the sheet material into contact and providing an adhesive thereto to bond the first and second elements together.

In a preferred process this operation is performed down the length of the sheet of material and is further performed on two separate sheets of material which can then be bonded together at their unclad surfaces to provide a finished clad hygienic article. In a further embodiment the grooves are formed close to the edge of the sheet material for example at a distance of up to 3 cms from the edge.

The invention may be used for the production of a wide range of articles and from a wide range of sheet materials and thermoformable materials. The number, size and location of the groove or grooves being selected according to the article to be produced. The invention is however particularly useful in the production of articles to be used in hygienic and sterile environments. For example, it may be used to produce doors, door frames, window frames and the like that are used in hygienic and/or sterile environments such as hospitals, food preparation areas, research facilities, manufacturing facilities such as pharmaceutical manufacture, facilities employing nuclear energy or radioactive materials.

The cladding material used in the present invention may be of any suitable thickness providing it is thermoformable. In a preferred embodiment a flat sheet of material is bonded to the cladding material. One or more grooves are cut in the flat sheet of material along the length of the material so that at least two separate pieces of the material are bonded to the cladding material with a line of the cladding material exposed at the bottom of the groove. The surface of the cladding material remote from the groove may then be heated along the line that is exposed at the bottom of the groove and the section of the cladding material with the sections of the sheet material folded along the heated line to bring the two surfaces of the sheet material that defined the groove or grooves into contact with each other so that they may be glued together with a suitable adhesive.

This process may be performed along the length of the sheet material so that the sheet material is provided with cladding on the major surface which is to provide the outer surface of the finished article and the cladding is also provided along both sides of the sheet. The process may be performed down both longitudinal sides of the sheet material. Furthermore, the process may be performed on two pieces of the sheet material and the two sheets then bonded together at their surfaces which are not bonded to the cladding material in order to produce the finished, totally clad article. Dowels may be provided in the sheets to ensure that they are properly located relative to each other, and add extra strength to the bond.

The invention has the benefits that the line bending of the thermoformable material along the line of the groove or grooves localises and minimises the heat required in the production of the finished clad article and also permits a more accurate bending operation and improves the conformation of the cladding material to the sheet material. Additionally the process can be automated so increasing production speeds and accuracy of manufacture. Furthermore, the production of the article from two sections of the sheet material allows ready access to what will become the interior of the finished article and accordingly facilitates the provision of accessories such as visionpanels, windows, hinges, locks which may be mechanical, electrical or magnetic and handles.

In one embodiment the invention therefore provides a process comprising the following sequence of steps
i) providing a piece of sheet material
ii) passing the piece of sheet material to a station where it is bonded on one surface to a cladding of thermoformable material
iii) forming one or more grooves along the length of the piece of sheet material to expose the inner surface of the cladding material
iv) providing adhesive to within the groove or grooves
v) heating the exterior surface of the cladding material along the line exposed by the provision of the groove or grooves
vi) bending the cladding material about the heated line to bring the two surfaces of the groove or grooves together
vii) curing the adhesive.

The process may additionally include the treating two sheets and then Insertion of accessories such as hinges, locks, handles, vision panels and the like.
Additionally the process may include superimposing & bonding the two sections and curing the adhesive

These processes can readily be automated and can be performed sequentially along the length of a series of pieces of sheet material. Additionally the process can be performed on two pieces of sheet material in parallel which can be superimposed with their unclad surfaces meeting and adhered together. This step of superimposition may be part of the automated process and during the automated process an adhesive may be applied to the unclad surfaces.

In this preferred embodiment the two sections may be automatically processed in parallel and superimposed in a final stage of the process in which the sheets provided with cladding on one surface and are placed with their surfaces remote from the cladding together and their edges aligned with an adhesive there between and pressed together perhaps by passage through a pair of rollers.

The sheet material used in the articles of the present invention will be chosen according to the use to which the article is to be put. Examples of suitable materials include wood of various sorts, plastics perhaps as foamed material and metals such as steel or aluminium. Wood is a preferred material for the production of doors and the like to be used in hygienic environments such as hospitals. In many instances the material will be selected for its fire retardant properties so that doors, for example, can act as fire doors as well as providing the required hygiene and sterility.

The cladding material will also be chosen according to the use to which the article is to be put. The cladding material should be thermoformable to allow it to be bent along the line of the groove or grooves formed in the sheet material when heated to the thermoforming temperature. It should not however be thermoformable at other temperatures experienced in the manufacturing process or in the use of the final article. Rigid or semi-rigid polyvinyl chloride is a preferred cladding material which is preferably free of plasticiser. Other thermoformable materials that may be used include poly(meth)acrylates, polyolefines such as polypropylene and high density polyethylene, polyamides and polycarbonates. The preferred PVC cladding material is thermoformable in the range 60°C to 90°C and it is therefore preferred to use an electric line heater in order to raise the temperature of the PVC along the line or lines to the temperature required for thermoforming.

Any suitable adhesive may be used for bonding the two surfaces defining the groove or grooves when they are brought together by the line bending operation. The adhesive should be such that it will cure within a particular time and a two part polyurethane adhesive has been found to be particularly suitable. The same or a different adhesive may be used to join the two partially clad sections.

When the finished article is made from two separate pieces access is provided to the inside of the article and therefore allows the sheet material to be machined for the provision of accessories such as hinges for doors and windows, vision panels, locks which may be automated, electric or card operated systems which may be enclosed within the door for increased security, hinges, security systems and so forth. The groove or grooves that are cut along the length of the sheet of material is preferably "V" shaped and is preferably cut at a 45° angle to ensure that the two surfaces that define a groove come together upon the line bending of the cladding material.

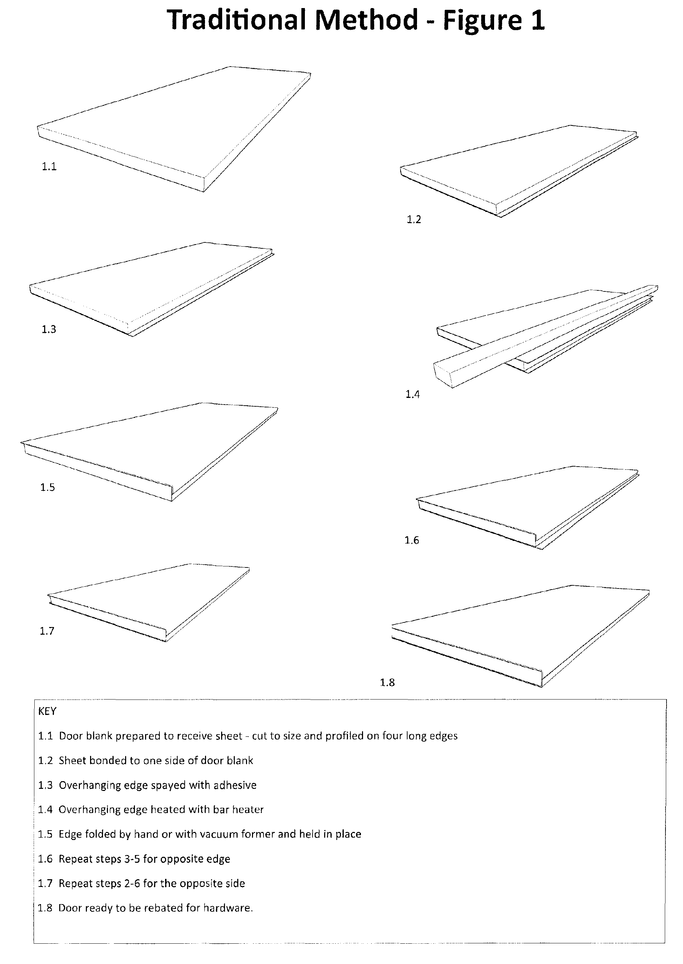

The present invention is illustrated but in no way limited to the accompanying drawings in which
Figure 1 shows the traditional method for the manufacture of a hygienic plastic clad door.

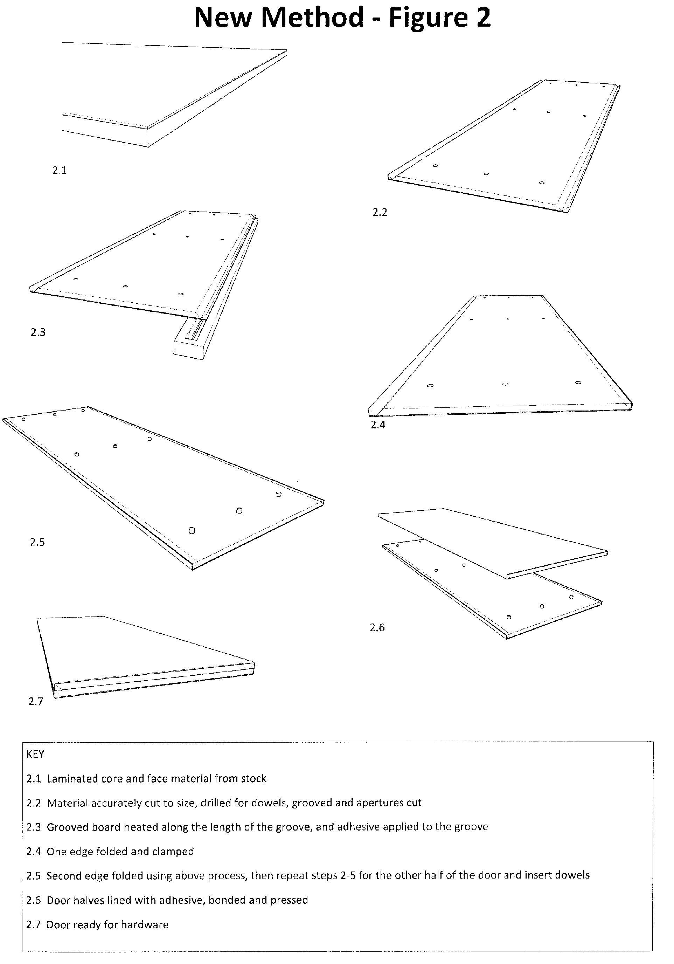

Figure 2 shows the present invention, as can be seen, the process of the present invention requires fewer steps.

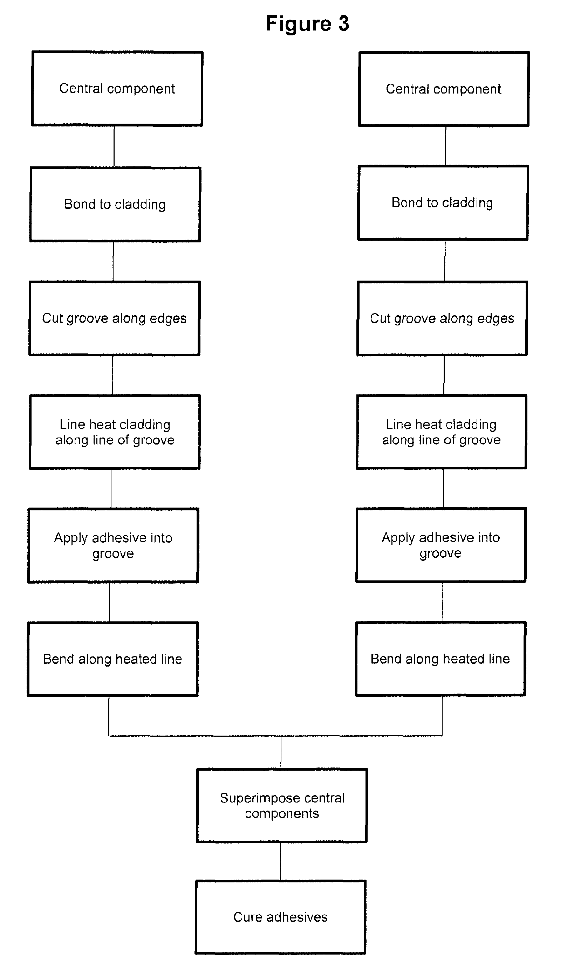

Figure 3 provides a flow chart of an automated manufacturing process according to the invention.

## Claims

1. A laminar construction comprising two sheets of material bonded to each other each sheet having one or more grooves formed along the length of the sheet to provide longitudinal elements of the material separate from each other and wherein the exterior surfaces of the longitudinal elements are bonded to a thermoformable cladding material and the cladding material has been bent about the line of the base of the groove or grooves to bring the opposed surfaces of the grooves into contact where they are adhesively bonded together.

2. A process for the production of a hygienic laminar structure comprising forming one or more grooves along a sheet of material that is bonded to a thermoformable cladding sheet to create separate elements of the sheet material bonded to the cladding sheet, providing heat to the exposed outer surface of the cladding sheet along the line or lines provided by the groove or grooves and bending the thermoformable cladding material about the line or lines to bring separate elements of the sheet material into contact and providing an adhesive thereto to bond the first and second elements together.

3. A process according to Claim 2 in which the operation is performed along the length of the sheet of material.

4. A process according to Claim 2 or Claim 3 in which the process is performed on two separate sheets of material which are then bonded together at their surfaces remote from the cladding to provide a finished clad hygienic article.

5. A process according to any of Claims 2 to 4 in which the grooves are formed at a distance of up to 3 cms from the edge.

6. A process according to any of Claims 2 to 5 in which a flat sheet of material is bonded to the cladding material one or more grooves are cut in the flat sheet of material along the length of the material so that at least two separate pieces of the material are bonded to the cladding material with one or more lines of the cladding material exposed at the bottom of the groove and the surface of the cladding material remote from the groove or grooves is heated along the line or lines corresponding to the base of the grooves and the cladding material is folded along the heated line or lines to bring the two surfaces of the sheet material that defined the groove or grooves into contact with each other so that they may be bonded together.

7. A process according to any of Claims 2 to 6 performed down both longitudinal sides of the sheet material.

8. A process according to any of Claims 2 to 7 performed on two pieces of sheet material and the two sheets are bonded together at their surfaces remote from the cladding material.

9. An process comprising the following sequence of steps.
a. providing a piece of sheet material
b. passing the piece of sheet material to a station where it is bonded on one surface to a cladding of thermoformable material
c. forming one or more grooves along the length of the piece of sheet material to expose a line of the inner surface of the cladding material
d. providing adhesive to within the groove or grooves
e. heating the exterior surface of the cladding material along the line exposed by the provision of the groove or grooves
f. bending the cladding material about the heated line to bring the two surfaces of the groove or grooves together
g. curing the adhesive.

10. A process according to Claim 9 further comprising the insertion of accessories into the sheet.

11. A process according to Claim 9 which is automated.

12. An automated process according to Claim 11 or Claim 12 in which two sections of sheet material are automatically processed in parallel and are then superimposed in which the sheets are provided with cladding on one surface and are superimposed on their unclad faces with an adhesive between the unclad faces and the sheets are then pressed together.

13. A process according to any of Claims 2 to 13 in which the sheet material is selected from wood, plastics optionally foamed and metals such as steel or aluminium and the cladding material is rigid or semi-rigid polyvinyl chloride.

14. An article made from two separate pieces of material prepared according to any of Claims 2 to 14 wherein prior to assembly of the two pieces of material, the material is machined for the provision of accessories.

15. An article according to Claim 15 comprising a door in which the accessories are selected from hinges and windows vision panels, locks which may be automated, electric or card operated systems and security systems.
